# EUROPEAN PATENT SPECIFICATION

(11) **EP 0 537 348 B1**
(45) Date of publication and mention of the grant of the patent: **07.05.1997**
(21) Application number: 91906570.6
(22) Date of filing: 30.03.1991
(51) Int. Cl.: B29D 30/30

(54) **DEVICE FOR APPLYING TIRE COMPONENT MATERIAL**
VORRICHTUNG ZUM ANBRINGEN VON REIFENBESTANDTEILEN
DISPOSITIF SERVANT A APPLIQUER UN MATERIAU DE COMPOSITION DE PNEUS

(30) Priority: 02.04.1990 JP 88765/90
(43) Date of publication of application: 21.04.1993
(73) Proprietor: Sumitomo Rubber Industries Limited, Kobe-shi, Hyogo-ken (JP)
(72) Inventor: SOEDA, Koji, Kobe-shi, Hyogo 658 (JP); IMAIZUMI, Yoshiaki, Toyota-shi, Aichi 471 (JP); OKUDA, Takaaki, Shirakawa-shi, Fukushima 961 (JP); KIDA, Junichi, Shirakawa-shi, Fukushima 961 (JP)
(74) Representative: Stewart, Charles Geoffrey
(86) International application number: JP9100427
(87) International publication number: WO9115359

(56) References cited:
- JP-A-50 082 182
- JP-A-57 133 042
- JP-A-59 187 836
- JP-A-63 095 939
- JP-U-60 005 818
- No further relevant documents have been disclosed.

## Description

### TECHNICAL FIELD

The present invention relates to an apparatus for applying tyre component material.

### BACKGROUND ART

When building a breaker-tread assembly tyre component material is applied to a belt drum. For this reason, it is necessary to cut tyre component material which is to be wound around the belt drum to a predetermined length.

Conventionally a worker visually measures the length and then cutting is carried out. Thus the length cutting operation is not accurate and is troublesome. In the case where the tyre component material concerned is a breaker, both ends thereof are cut at a predetermined angle relative to the longitudinal direction of the breaker, whereby a front acute angled portion and a rear acute angled portion are formed. Accordingly, there is the possibility that the tips of the front and rear acute angled portions are distorted. It is impossible to suitably apply the tyre component material on to the belt drum and to keep the length to be wound constant, if the tyre component material is in such a distorted condition.

In view of the above-mentioned problems, an object of the present invention is to provide an apparatus for applying tyre component material by which the length to be wound can be kept constant, distortion of the tips of the front and rear acute angled portions can be prevented, and positioning of the front and rear acute angled portions can be surely performed.

An apparatus comprising a pair of guide plates including magnets which attract the front acute angled portion of a band shaped tyre component material in accordance with the preamble of claim 1 is known from JP-U-605818.

### DISCLOSURE OF THE INVENTION

In order to achieve the above-mentioned objects, in an apparatus of the present invention, comprises a pair of guide plates which respectively guide each of both side edges of a band like tyre component material is arranged in parallel in the vicinity of a belt drum, a front magnet by which a tip of a front acute angled portion of the tyre component material is attracted to the guide plate is mounted on the guide plate, and a rear magnet by which a tip of a rear acute angled portion of the tyre component material is attracted to the guide plate is mounted on the guide plate, characterised by a fine adjustment mechanism which moves simultaneously the guide plates towards or away from each other is provided connected to the guide plates, and a carrying mechanism which carries a front acute angled portion of a tyre component material to the vicinity of a belt drum.

The apparatus of the present invention may further include a longitudinal guide mechanism comprising a plurality of guide rollers which contact with both edges of a tyre component material, the plurality of guide rollers at the front acute angled portion side of the tyre component material being supported so as to be movable in the transverse direction during applying the tyre component material to a belt drum, is arranged to provide a carrying path which feeds the tyre component material toward the belt drum.

The apparatus of the present invention may also further include magnets by which the tyre component material is attracted to an outer circumference of the belt drum, a cutter which cuts the tyre component material with a predetermined angle relative to its longitudinal direction to form a rear acute angled portion under a condition where the tip of the front acute angled portion of the tyre component material is attracted, and the belt drum is rotated about its shaft centre by a predetermined angle, and a longitudinal guide mechanism comprising a plurality of guide rollers, which contact both side edges of the tyre component material and is arranged to provide a carrying path which feeds the tyre component material towards the belt drum, the plurality of guide rollers at the front acute angled portion side of the tyre component material being supported so as to be movable in the transverse direction during application of the tyre component material to a belt drum.

With this apparatus for applying tyre component material, the tyre component material is guided by a pair of guide plates in the vicinity of the belt drum and is correctly centred to be fed to the belt drum with a steel breaker material. The tip of the front acute angled portion is attracted by the first magnet and contacts one of the guide plates. The tip of the rear portion is attracted by the rear magnet and contacts the other guide plate.

Also the tension applied to the tyre component material in the cross direction in the vicinity of the belt drum is minimised, and the material can be positioned in the cross direction.

Furthermore, the tyre component material is carried to the vicinity of the belt drum with its front acute angled portion guided by the guide plates. In this operation, the tip of the front acute angled portion is attracted by the front magnet and contacts one of the guide plates. Then, the tip of the front acute angled portion is placed at the belt drum and the belt drum is rotated by a predetermined angle. Under this condition, the tyre component material is cut to form the rear acute angled portion. Thereafter the tip of the rear acute angled portion is attracted by the rear magnet and contacts with the other of the guide plates.

### BEST MODE FOR CARRYING OUT THE INVENTION

Hereinafter, the present invention is explained in details based on the drawings showing an embodiment in which:-
Figure 1 is a schematic side view showing an embodiment of the present invention;
Figures 2 and 3 are schematic plan views of a main part;
Figure 4 is an enlarged plan view of a main part; and
Figure 6 is an enlarged side view of a main part.

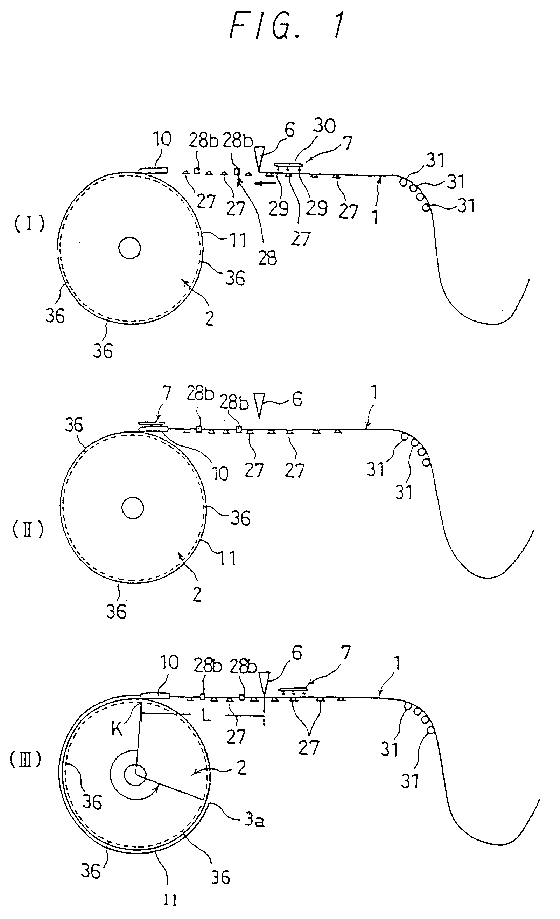

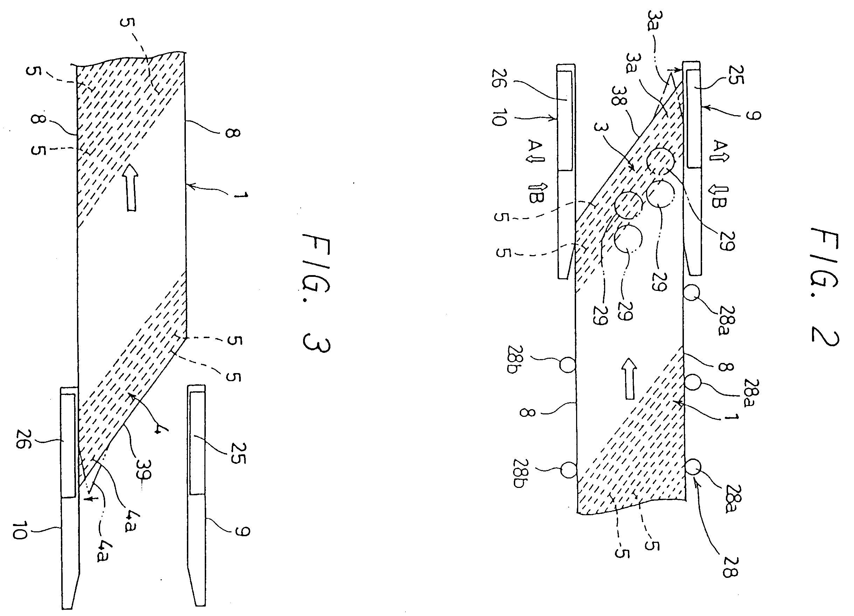

Figure 1 shows an apparatus for applying tyre component material of the present invention. This apparatus is used for applying a tyre component material 1 such as a breaker to a belt drum 2. As shown in Figures 2 and 3, a breaker is a band wherein many metal wires 5 ... are obliquely arranged at a predetermined pitch in rubber, and a front acute angled portion 3 and a rear acute angled portion 4 are formed respectively at its front and rear.

The apparatus comprises a cutter 6 which cuts the tyre component material 1 obliquely to form the front acute angled portion 3 and the rear acute angled portion 4, a carrying mechanism 7 which carries the front acute angled portion 3 of the tyre component material 1 to the vicinity of the belt drum 2, a pair of guide plates 9, 10 which guides both side edges 8,8 respectively, and the like. The cutter 6 cuts the long band tyre component material 1 supplied to the machine at a predetermined angle relative to its longitudinal direction to form the front acute angled portion 3. The front acute angled portion 3 is carried to the vicinity of the belt drum 2 by the carrying mechanism 7 and guided by the guide plates 9, 10 and is taken to the outer circumference 11 of the belt drum 2. Under this condition, the belt drum 2 is rotated by a predetermined angle, thereafter the cutter 6 cuts the long band tyre of component material 1 to a predetermined length with a predetermined angle relative to its longitudinal direction to form the rear acute angled portion 4.

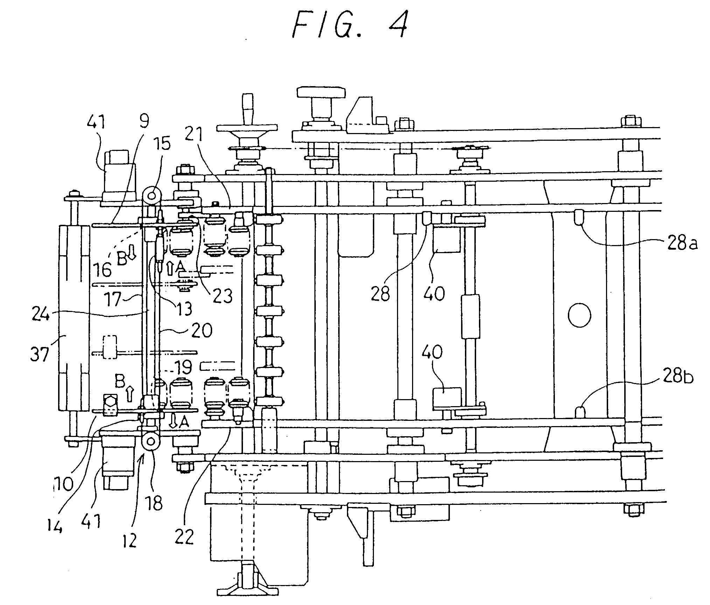

The guide plates 9, 10 are arranged in the vicinity of the belt drum 2, and they may approach to or move from each other in directions indicated by arrows A and B by a fine adjustment 12 shown in Figure 4.

The guides plates 9, 10 are provided respectively with wire connecting members 13, 14. With one wire connecting member 13 is connected a wire 17 which passes over a roller 15 and is connected with the connecting member 14 via an aperture 16 formed in the guide plate 9. With the other wire connecting member 14 is connected a wire 20 which passes over a roller 18 and is connected to the connecting member 13 via an aperture 19 formed in the guide plate 10. A carrying path on which the tyre component material 1 is carried is provided with guide walls 21, 22. A tip of the guide wall 21 and a base edge of the guide plate 9 are connected by an elastic member 23. This elastic member 23 forces the guide plate 9 in the direction indicated by arrow B.

Thus if one guide plate 9 is forced by the elastic member 23 in the direction indicated by the arrow B, the other guide plate 10 is also forced in that direction indicated by arrow B because both guide plates are interconnected by the wires 17 and 20. The guide walls 21 and 22 are moved by cylinders 40,40 approaching to or leaving from each other with being kept in parallel condition. Numeral 24 represents a rod which guides the guide plates 9 and 10. That is, if the guide wall 21 is moved reciprocatingly by the cylinder 40 in cross direction to the carrying path, the guide plates 9 and 10 are moved reciprocatingly being interlocked to the reciprocating movement in the cross direction (namely, directions indicated by arrows A and B). However, even if the guide wall 22 is moved reciprocatingly by the cylinder 40 in the cross direction because the guide wall 22 and the guide plate 10 are not interconnected.

The guide plate 9 is provided with a front magnet 25 as shown in Figures 2 and 3, and the guide plate 10 is provided with a rear magnet 26.

The front magnet 25 is arranged at the front of one guide plate 9 and attracts the metal wires 5 ... in the tip 3a of the front acute angled portion 3 of the tyre component material 1. The rear magnet 26 is arranged at the front of the other guide plate 10 and attracts the metal wires ... in the tip 4a of the rear acute angled portion 4 of the tyre component material 1. That is, if the tip 3a is distorted to be curved inwardly as shown by the broken line in Figure 2, the tip 3a is attracted in the direction indicated by the arrow and the distortion is corrected. If the tip 4a is distorted as shown by the broken line in Figure 3, the tip 4a is attracted in the direction indicated by the arrow and that distortion is corrected.

Many spherical bearings 27... on which the tyre component material runs are arranged to provide the carrying path as shown in Figure 1. A longitudinal guide mechanism 28 which guides the tyre component material 1 in the transverse direction are also provided. The mechanism 28 comprises a plurality of guide rollers 28a..., 28b... (refer to Figures 1 and 2) which guide both side edges 8,8 of the material 1. That is, the guide rollers 28a..., 28b... are arranged at the inner surfaces of the guide walls 21 and 22 as shown in Figure 4. When pulling out the front of the material 1 towards the drum 2 before the material 1 is applied to the belt drum 2, the cylinders 40 at both sides are operated to centre the material 1. At this stage, the plurality of guide plates 28a... at the front acute portion 3 side are only operated (that is, the roller 28a contacts one Side edge of the material 1), and the guide rollers 28b... at the other side are not operated (that is, the roller 28b does not contact the material 1), so that tension applied in the transverse direction to the material 1 is minimised and positioning of the material 1 in the transverse direction is achieved.

The carrying mechanism 7 comprises a suction mechanism. A plurality of suction pads 29... projected from a plate-like body 30 holds the front acute angled portion 3 and carries the tyre component material 1 along the carrying path as indicated by an arrow, as shown in Figure 1. As a means for moving the body 30, a servo motor, a cylinder mechanism or the like can be employed. In the case of a servo motor, various sizes of material can be accommodated.

Wheels 31... are arranged to the carrying path as shown in Figure 1. The wheel 31 comprises a disc member 32 having a bore 33 for a shaft, a shaft member 34 rotatably engaged in the bore 33 and rotating members 34... arranged to outer circumference of the disc member 32 in the circumferential direction at a predetermined pitch. The shaft member 32 comprises a cylindrical body and always rotates in the direction indicated by the arrow. The rotating member 35 comprises a cylindrical which is rotatable about its shaft centre. Accordingly, when the tyre component material 1 is supported by the wheel 31, load W is applied to the wheel 31 and the tyre component material 1 is carried in the direction as indicated by an arrow, tension applied to the tyre component material 1 is minimised because the shaft member 34 rotates in the direction indicated by the arrow. Further, during this carriage, the tyre component material 1 is supported also by the spherical bearings 27... and each bearing 27 also contributes to reduction of tension. Each of the rotating members 35... is rotatable about its shaft centre and thanks to this the tyre component material 1 can smoothly move in the transverse direction.

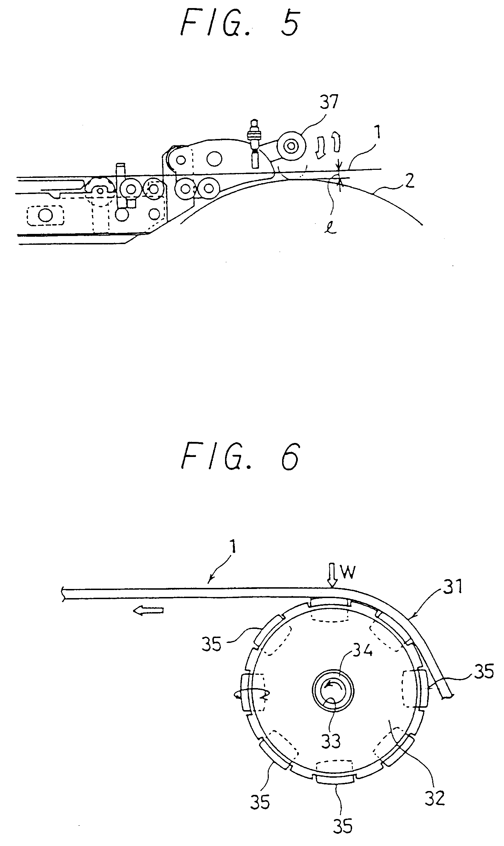

The belt drum 2 is provided with magnets 36... at its outer circumference 11 which attract the steel wires in the tyre component material 1, as shown in Figure 1. Slightly in the front of the guide plates 9 and 10 a push roller 37 is arranged (refer to Figure 4). The push roller 37 forces the tip 3a of the front acute angled portion 3 of the tyre component material 1 against the outer circumference 11 of the belt drum 2 so that the magnet 36 attracts the tip 3a. That is, the roller 37 is fluctuated in the directions indicated by arrows in Figure 5 by rotary actuators 41,41 arranged in the vicinity of the guide plates 9 and 10.

Hereinafter a method for applying a tyre component material with an apparatus constituted as above is explained.

A tyre component material 1 is cut by the cutter 6 at a predetermined angle (for example 15 to 70 degrees) relative to its longitudinal direction to form a front acute angled portion 3 (refer to Figure 1(I)). A tip 3a of the front acute angled portion 3 is held by the carrying mechanism 7 (for example, the suction pads 29... positioned as shown by broken lines in Figure 2), the front acute angled portion 3 is carried to between the guide plates 9 and 10, and the tip 3a is attracted to the guide plate as shown in Figure 2. During carriage by carrying mechanism 7, the distance between the guide plates 9 and 10 is kept larger than the width of the tyre component material 1. Thereafter the distance between the plates 9 and 10 is adjusted by a fine adjustment mechanism 12.

Under the condition shown in Figure 2 where the tip 3a is attracted to the guide plate 9 (the dimension ℓ of the space between the tip 3a and the outer circumference 11 of the belt drum 2 is about 5mm), the push roller 37 forces the tip 3a against the belt drum 2 so that the tip 3a is attached to the outer circumference 11 of the belt drum 2. Then the belt drum 2 is rotated in the direction indication by the arrow by a servo motor or the like (not shown). When the belt drum 2 has rotated by a predetermined angle, the rotation is stopped and the cutter 6 is operated to cut the tyre component material 1 so that a rear acute angled portion 4 is formed. That is, the tip 3a of the front acute angled portion 3 is positioned as shown in Figure 1(III) and the length of the attracted tyre component material 1 to the outer circumference 11 is made constant. In this case, the distance L between the cutter 6 and a position K where the tyre component material 1 is attached to the outer circumference 11 is set the same as or slightly longer than a length from the tip 3a to the position K (measured along the outer circumference 11 on which the tyre component material is not attracted).

For this reason, when the tyre component material 1 is completely adhered to the belt drum 2, the front edge 38 of the front acute angled portion 3 and the rear edge 39 of the rear acute angled portion 4 meet together or are slightly overlapped (about 1mm).

The present invention is not limited to the above-mentioned embodiments. Modification of its design is allowed as far as it does not deviate from the gist of the present invention. For example, the tyre component material 1 is not limited to a breaker, and a steel filler or the like may also be used. Further the number of spherical bearings 27, guides rollers 28a, 28b and wheels 31 or the like can be flexibly set.

Since an apparatus of the present invention is constituted as above, the following effects are brought.

An apparatus for applying tyre component material wherein a pair of the guide plates 9 and 10 which respectively guide each of both side edges 8,8 of the band like tyre component material 1 are arranged in parallel in the vicinity of the belt drum 2, the fine adjustment mechanism 12 which moves simultaneously the guides plates 9 and 10 together or apart from each other is arranged continuously to the guide plates 9 and 10, the front magnet 25 by which the tip 3a of the front acute angled portion 3 of the tyre component material 1 is attached to the guide plate 9 is mounted on the guide plate 9, and the rear magnet 26 by which he tip 4a of the rear acute angled portion 4 of the tyre component material 1 is attracted to the guide plate 10 is mounted on the guide plate 10 enables the tyre component material 1 to be guided to the belt drum 2 in the correct position without distortions of the front acute angled portion 3 or the rear acute angled portion 4 and the tyre component material 1 can be applied to the belt drum 2.

An apparatus for applying tyre component material wherein the longitudinal guide mechanism 28 comprising a plurality of guide rollers 28a..., 28b... which contact with both edges of the tyre component material 1, only the plurality of guide rollers 28a... at the front acute angled portion 3 side of the tyre component material 1 being supported so as to be movable in the transverse direction during application of the tyre component material 1 to the belt drum 2, is arranged to the carrying path which feeds the tyre component material 1 towards the belt drum 2 can always keep a length of the tyre component material 1 to be wound around the belt drum 2 constant because the tyre component material 1 to be wound around the belt drum 2 is fed towards the drum 2 in a condition where tension applied thereto is minimised and the material is positioned in transverse section.

An apparatus for applying tyre component material comprising: the carrying mechanism 7 which carries the front acute angled portion 3 of the tyre component material 1 to the vicinity of the belt drum 2, a pair of guide plates 9 and 10 which respectively guide each of both side edges 8,8 of the tyre component material 1, the front magnet 25 by which the tip 3a of the front acute portion 3 of the tyre component material 1 is attracted to the guide plate 9, the magnets 36... by which the tyre component material 1 is attracted to the outer circumference 11 of the belt drum 2, the cutter 6 which cuts the tyre component material 1 with a predetermined angle relative to its longitudinal direction to form the rear acute portion 4 under a condition where the tip 3a of the front acute angled portion 3 of the tyre component material 1 is attracted, and the belt drum 2 is rotated about its shaft centre by a predetermined angle, the rear magnet 26 by which the tip 4a of the rear acute portion 4 of the tyre component material 1 is attracted to the guide plate 10, and the longitudinal guide mechanism 28 comprising a plurality of guide rollers 28a..., 28b... which contacts both side edges of the tyre component material 1 and is arranged to the carrying path which feeds the tyre component material 1 towards the belt drum 2, only the plurality of guide rollers 28a... at the front acute angle portion 3 side of the tyre component material 1 being supported so as to be movable in the transverse direction during application of the tyre component material 1 to the belt 2 makes it possible for the tyre component material 1 to be automatically guided towards the belt drum 2 in the condition where the front acute angled portion 3 and the rear acute angled portion 4 are correctly positioned without distortion and that the tyre component material 1 is wound around the belt drum 2 always with a constant length.

## Claims

1. An apparatus for applying tyre component material comprising a pair of guide plates (9 and 10) which respectively guide each of both side edges (8,8) of a band like tyre component material (1) is arranged in parallel in the vicinity of a belt drum (2), a front magnet (25) by which a tip (3a) of a front acute angled portion (3) of the tyre component material (1) is attracted to the guide plate (9) is mounted on the guide plate (9), and a rear magnet (26) by which a tip (4a) of a rear acute angled portion (4) of the tyre component material (1) is attracted to the guide plate (10) is mounted on the guide plate (10), characterised by a fine adjustment mechanism (12) which moves simultaneously the guide plates (9 and 10) towards or away from each other is provided connected to the guide plates (9 and 10), and a carrying mechanism (7) which carries a front acute angled portion (3) of a tyre component material (1) to the vicinity of a belt drum (2).

2. An apparatus according to claim 1, characterised in that the apparatus further includes a longitudinal guide mechanism (28) comprising a plurality of guide rollers (28a...,28b...) which contacts both edges of a tyre component material (1), only the plurality of guide rollers (28a...) at the front acute angled portion (3) side of the tyre component material (1) being supported so as to be movable in the transverse direction during applying the tyre component material (1) to a belt drum (2), is arranged to provide a carrying path which feeds the tyre component material (1) towards the belt drum (2).

3. An apparatus according to either of claims 1 or 2, characterized in that the apparatus further includes magnets (36...) by which the tyre component material (1) is attracted to an outer circumference (11) of the belt drum (2), a cutter (6) which cuts the tyre component material (1) to a predetermined angle relative to its longitudinal direction to form a rear acute angled portion (4) under a condition where the tip (3a) of the front acute angled portion (3) of the tyre component material (1) is attracted and the belt drum (2) is rotated about its shaft centre by a predetermined angle, and a longitudinal guide mechanism (28) comprising a plurality of guide rollers (28a...,28b...) which contact with both side edges of the tyre component material (1) and is arranged to provide a carrying path which feeds the tyre component material (1) towards the belt drum (2), only the plurality of guide rollers (28a...) at the front acute portion (3) side of the tyre component material (1) being supported so as to be movable in the transverse direction during applying the tyre component material (1) to the belt drum (2).

## Patentansprüche

1. Vorrichtung zum Aufbringen von Reifenbestandteilmaterial umfassend einem Paar Führungsplatten (9 und 10), die jeweils beide Seitenränder (8,8) eines bandförmigen Reifenbestandteilmaterials (1) führen, das parallel in der Nähe einer Bandtrommel (2) angeordnet ist, einen vorderen Magneten (25), durch den eine Spitze (3a) eines vorderen spitzwinkeligen Abschnitts (3) des Reifenbestandteilmaterials (1) an die Führungsplatte (9) angezogen wird, der an der Führungsplatte (9) befestigt ist, und einen hinteren Magneten (26), durch den eine Spitze (4a) eines hinteren spitzwinkeligen Abschnitts (4) des Reifenbestandteilmaterials (1) an die Führungsplatte (10) angezogen wird, der an der Führungsplatte (10) befestigt ist, dadurch gekennzeichnet, daß ein Feineinstellungsmechanismus (12), der die Führungsplatten (9 und 10) gleichzeitig aufeinander zu oder voneinander weg bewegt, mit den Führungsplatten (9 und 10) verbunden vorgesehen wird, sowie ein Beförderungsmechanismus (7), der einen vorderen spitzwinkeligen Abschnitt (3) eines Reifenbestandteilmaterials (1) in die Nähe einer Bandtrommel (2) befördert.

2. Vorrichtung nach Anspruch 1, dadurch gekennzeichnet, daß die Vorrichtung ferner einen Längsführungsmechanismus (28) mit einer Vielzahl von Führungsrollen (28a..., 28b...) aufweist, der beide Ränder eines Reifenbestandteilmaterials (1) berührt, wobei nur die Vielzahl von Führungsrollen (28a...) an der Seite des vorderen spitzwinkeligen Abschnitts (3) des Reifenbestandteilmaterials (1), die derart gelagert ist, daß sie während des Aufbringens des Reifenbestandteilmaterials (1) auf ein Bandtrommel (2) in der Querrichtung bewegbar ist, derart angeordnet ist, daß ein Beförderungsweg geschaffen wird, der das Reifenbestandteilmaterial (1) der Bandtrommel (2) zuführt.

3. Vorrichtung nach Anspruch 1 oder 2, dadurch gekennzeichnet, daß die Vorrichtung ferner Magneten (36...) aufweist, durch die das Reifenbestandteilmaterial (1) an einen äußeren Umfang (11) der Bandtrommel (2) angezogen wird, eine Schneideeinrichtung (6), die das Reifenbestandteilmaterial (1) auf einen vorbestimmten Winkel relativ zu seiner Längsrichtung schneidet, um einen hinteren spitzwinkeligen Abschnitt (4) in dem Zustand zu formen, in dem die Spitze (3a) des vorderen spitzwinkeligen Abschnitts (3) des Reifenbestandteilmaterials (1) angezogen ist und die Bandtrommel (2) um ihre Wellenachse um einen vorbestimmten Winkel gedreht ist, und einen Längsführungsmechanismus (28) mit einer Vielzahl von Führungsrollen (28a..., 28b...), welche beide Seitenränder des Reifenbestandteilmaterials (1) berühren und der angeordnet ist, um einen Beförderungsweg zur Verfügung zu stellen, der das Reifenbestandteilmaterial (1) der Bandtrommel (2) zuführt, wobei nur die Vielzahl der Führungsrollen (28a...) an der Seite des vorderen spitzwinkeligen Abschnitts (3) des Reifenbestandteilmaterials (1) derart gelagert ist, daß sie während des Aufbringens des Reifenbestandteilmaterials (1) auf die Bandtrommel (2) in der Querrichtung bewegbar ist.

## Revendications

1. Appareil d'application d'un matériau d'éléments constituants de pneumatique, comprenant deux plaques de guidage (9 et 10) qui guident respectivement chacun des deux bords latéraux (8, 8) d'un matériau d'éléments constituants de pneumatique (1) en forme de bandage sont placés parallèlement au voisinage du tambour de ceinture (2), un aimant avant (25) grâce auquel une extrémité (3a) d'une partie avant (3) d'angle aigu du matériau (1) d'éléments constituants de pneumatique est attirée vers la plaque de guidage (9) étant monté sur la plaque de guidage (9), et un aimant arrière (28) grâce auquel une extrémité (4a) de la partie arrière (4) d'angle aigu du matériau (1) d'éléments constituants est attirée vers la plaque de guidage (10) étant monté sur la plaque de guidage (10), caractérisé par un mécanisme de réglage fin (12), qui déplace simultanément les plaques de guidage (9 et 10) afin qu'elles se rapprochent ou s'écartent, est raccordé aux plaques de guidage (9 et 10), et un mécanisme (7) transporte une partie avant (3) d'angle aigu du matériau (1) d'éléments constituants du pneumatique vers le voisinage d'un tambour de ceinture (2).

2. Appareil selon la revendication 1, caractérisé en outre en ce que l'appareil comprend un mécanisme de guidage longitudinal (28) comportant plusieurs rouleaux de guidage (28a, 28b) qui sont au contact des deux bords d'un matériau (1) d'éléments constituants de pneumatique, seuls les rouleaux de guidage (28a) du côté de la partie avant (3) d'angle aigu du matériau (1) d'éléments constituants de pneumatique étant supportés afin qu'ils soient mobiles en direction transversale lors de l'application de ce matériau (1) d'éléments constituants de pneumatique sur un tambour de ceinture (2), et disposé afin qu'il forme un trajet de transport qui permet l'avance du matériau (1) d'éléments constituants de pneumatique vers le tambour de ceinture (2).

3. Appareil selon l'une des revendications 1 et 2, caractérisé en ce qu'il comporte en outre des aimants (36) grâce auxquels le matériau (1) d'éléments constituants de pneumatique est attiré vers une circonférence externe (11) du tambour de ceinture (2), un organe de coupe (6) qui coupe le matériau (1) d'éléments constituants de pneumatique à un angle prédéterminé par rapport à sa direction longitudinale pour la formation d'une partie arrière (4) d'angle aigu lorsque l'extrémité (3a) de la partie avant (3) d'angle aigu du matériau (1) d'éléments constituants du pneumatique est attirée et le tambour de ceinture (2) est entraîné en rotation autour du centre de son arbre d'un angle prédéterminé, et un mécanisme (28) de guidage longitudinal comprenant plusieurs rouleaux de guidage (28a, 28b) qui sont au contact des deux bords latéraux du matériau (1) d'éléments constituants du pneumatique et qui est destiné à former un trajet de transport permettant l'avance du matériau (1) d'éléments constituants de pneumatique vers le tambour de ceinture (2), seuls les rouleaux de guidage (28a) placés du côté de la partie avant (3) d'angle aigu du matériau (1) d'éléments constituants de pneumatique étant supportés afin qu'ils soient mobiles dans la direction transversale pendant l'application du matériau (1) d'éléments constituants du pneumatique au tambour de ceinture (2).
